# EUROPÄISCHE PATENTSCHRIFT

(11) **EP 0 680 665 B1**
(45) Veröffentlichungstag und Bekanntmachung des Hinweises auf die Patenterteilung: **11.06.1997**
(21) Anmeldenummer: 94905688.1
(22) Anmeldetag: 24.01.1994
(51) Int. Cl.: H01R 4/68

(54) **VERFAHREN UND VERBINDUNG ZUM ELEKTRISCHEN VERBINDEN ZWEIER SUPRALEITENDER KABEL**
PROCESS AND CONNECTION FOR ELECTRICALLY CONNECTING TWO SUPERCONDUCTING CABLES
PROCEDE ET RACCORD PERMETTANT DE CONNECTER DEUX CABLES SUPRACONDUCTEURS

(30) Priorität: 25.01.1993 DE 4301944
(43) Veröffentlichungstag der Anmeldung: 08.11.1995
(73) Patentinhaber: EUROPÄISCHE ATOMGEMEINSCHAFT (EURATOM), L-2920 Luxembourg (LU)
(72) Erfinder: BRUZZONE, Pierluigi, D-85748 Garching (DE); SALPIETRO, Ettore, D-81739 München (DE)
(74) Vertreter: Vogeser, Werner, Dipl.-Ing.
(86) Internationale Anmeldenummer: EP9400176
(87) Internationale Veröffentlichungsnummer: WO9417567

(56) Entgegenhaltungen:
- EP-A- 0 371 410
- EP-A- 0 556 837
- JP-A-59 058 766
- PATENT ABSTRACTS OF JAPAN vol. 13, no. 386 (E-812) (3734) 25. August 1989 & JP,A,01 134 881 (TOSHIBA) 26. Mai 1989
- PATENT ABSTRACTS OF JAPAN vol. 13, no. 171 (C-588) (3519) 24. April 1989 & JP,A,64 003 082 (HITACHI) 6. Januar 1989

## Beschreibung

Die Erfindung betrifft eine Kabelverbindung entsprechend dem Oberbegriff des Anspruchs 1.

Große supraleitende Kabel, die einige 1000 Ampere führen, werden üblicherweise in Einheitslängen von einigen 100 m hergestellt. Um sehr große supraleitende Spulen für z.B. Fusionsmagnete und Energiespeichervorrichtungen zu wickeln, werden einige Kilometer solcher Kabel benötigt. Zum besseren Zugriff werden die elektrischen Verbindungen zwischen den einzelnen Einheitslängen an die Ränder der Lagen im Falle von Lagenwicklungen oder an den äußeren Radius von Flachspulen gelegt. Um die örtliche Temperaturerhöhung innerhalb der konstruktiv festgelegten Daten einer Spule zu halten, muß die an den Kabelverbindungen unter Betriebsbedingungen verbrauchte Leistung möglichst gering sein. Dies kann bei Wicklungen, die nur im DC-Betrieb arbeiten, dadurch geschehen, daß die Übergänge zwischen den supraleitenden Kabeln in elektrisch hochleitende Metalle großen Querschnitts eingebettet werden. Für Wicklungen, die mit sich zeitlich änderndem Betrieb arbeiten, führt die Forderung nach niedrigen Wirbelstromverlusten zu zusätzlichen Konstruktionszwängen.

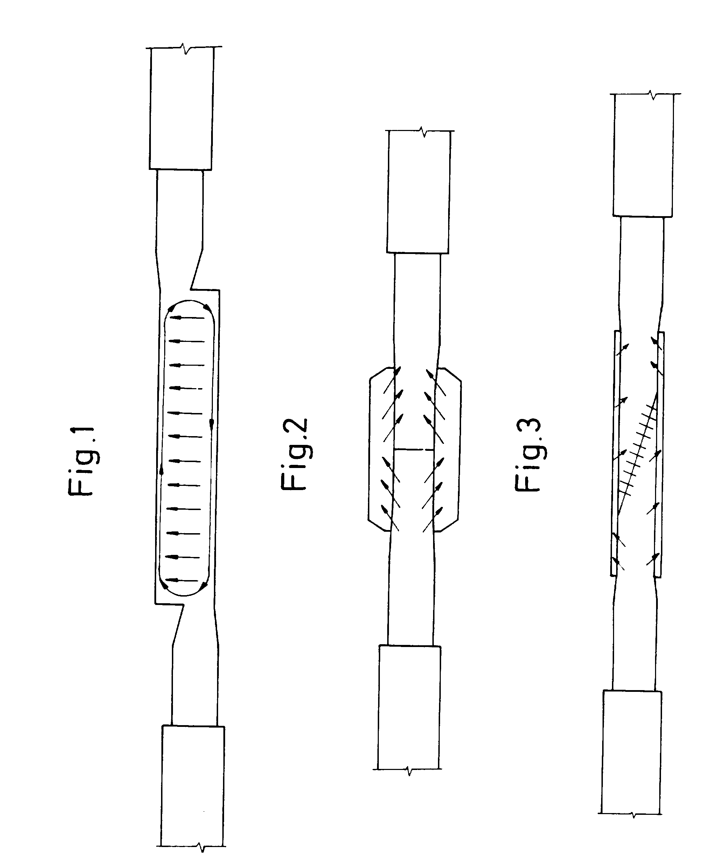

Zwei Verbindungen nach dem Stand der Technik sind in den beigefügten Figuren 1 und 2 dargestellt, die Querschnitte durch bekannte Kabelverbindungen supraleitender Kabel zeigen. Eine Verbindung von Supraleitern mit abgeschrägten Enden ist aus der EP 0 371 410 A1 bekannt.

Eine Kabelverbindung niedrigen elektrischen Widerstands kann durch Überlappen und Verschweißen zweier Kabelenden erreicht werden, wobei der Überlappungsbereich länger als die stromführende Übergangslänge ist, die benötigt wird, um den Stromtransport durchführen zu können. Die Kabelenden können, bevor sie überlappt und gelötet werden, aufgedreht und in einen Metallblock aus hochleitendem Material eingebettet werden. Bei Supraleitern, die auf intermetallischen NB₃SN-Strängen basieren, muß der Lötvorgang nach der üblichen Reaktions-Wärmebehandlung durchgeführt werden.

Je größer die Überlappungslänge ist, desto niedriger ist der Übergangswiderstand. Die Verbesserung des Widerstands wird jedoch für Überlappungslängen von mehr als einem Meter nahezu vernachlässigbar. Wenn ein sich zeitlich änderndes Magnetfeld, z. B. das Eigenfeld einer im Impulsbetrieb arbeitenden Spule, quer zur Überlappungsverbindung angelegt wird, werden sehr große Wirbelströme in der Schleife induziert, die aus den beiden parallelen Kabelenden besteht, wie in Figur 1 durch eine Schleife angegeben ist. Die Leistungsverluste durch Wirbelströme sind dem Quadrat der Überlappungslänge proportional.

Es ist zwar möglich, die Überlappungslänge hinsichtlich der Widerstandserfordernisse und der Wirbelstromverluste zu optimieren, jedoch ist dieser Kompromiß bei schwierigen Betriebsbedingungen nicht akzeptierbar. Der niedrige Querwiderstand, der durch Füllen mit Lötmaterial und/oder durch zusätzliches Stabilisieren des Materials erreicht wird, zusammen mit einer Überlappungslänge, die die Kabelverdrillungssteigung überschreitet, führt zu Wirbelstromverlusten, die ein oder zwei Größenordnungen höher liegen im Vergleich zu dem supraleitenden Kabel. Unter dieser Bedingung kann ein großer Feldimpuls (ΔB, B) zu unzulässig großen Energieverlusten am Übergangsbereich führen.

Ein weiteres Problem derartiger Kabelverbindungen ist die begrenzte mechanische Belastbarkeit. Zugspannungen im Kabel können zu einer Abscherbelastung der Kabelverbindung führen. Um eine solche Abscherbelastung zu vermeiden, muß eine zusätzliche Verstärkung vorgesehen werden.

Eine alternative Kabelverbindung zeigt Figur 2 (entsprechend der US-A-3 449 818), bei der es sich um eine Stumpfverbindung handelt und bei der die Kontaktfläche senkrecht zur Kabelachse verläuft. Die stumpfen Enden der Kabel können durch Schweißen oder Löten verbunden werden. Der Hauptvorteil dieser Art von Kabelverbindung liegt darin, daß keine zusätzlichen Wirbelstromverluste auftreten. Die AC-Verluste sind mit denen eines blanken Leiters vergleichbar, da der Querwiderstand über einen Abschnitt verringert ist, der weit kürzer als die Kabelverdrillungssteigung ist.

Ein niedriger Übergangswiderstand bei einer solchen Kabelverbindung kann nur erreicht werden, wenn die verschweißten Enden mit einer dicken Kupferhülse umgeben werden (JP-A-59058766). Der Hauptnachteil dieser Technik liegt darin, daß ein großes Volumen um die Kabelenden freigehalten werden muß, um Schweißwerkzeuge und Röntgengeräte zum Kontrollieren der Schweißung zuführen zu können. Dieser Raum steht aber bei den meisten Spulen für Fusionsapparate nicht zur Verfügung. Eine weitere Forderung bei Verbindungen für große NB₃SN-Magnete ist die Kompatibilität mit der Wicklungs-Reaktions-Technik. Dies bedeutet, daß die Verbindung vor der Reaktionswärmebehandlung durchgeführt werden muß, d. h., ohne wesentliche thermische Belastung der Supraleiter. Die Bearbeitung und Handhabung der Verbindung nach dem Reaktionsvorgang muß auf Maßnahmen beschränkt bleiben, die keine Verlagerung der Supraleiter erfordern.

Die JP-A-1-260776A zeigt eine Verbindung, bei der die freigelegten Enden der Kabel mittels einer Hülse aufeinandergepreßt werden.

Der Erfindung liegt die Aufgabe zugrunde, eine Kabelverbindung zu schaffen, durch die die Anforderungen hinsichtlich eines niedrigen elektrischen Widerstands, niedriger Wirbelstromverluste, einer kompakten Gesamtgröße, einer hohen mechanischen Belastbarkeit und eines geringen Herstellungsrisikos erfüllt werden. Gelöst wird diese Aufgabe gemäß der Erfindung durch die im Anspruch 1 angegebenen Merkmale. Zweckmäßige Ausgestaltungen der Erfindung ergeben sich aus den Unteransprüchen.

Die Erfindung wird nachstehend anhand der Figuren 3 bis 9 beispielsweise erläutert. Es zeigt:
Figur 3 schematisch einen Längsschnitt einer Kabelverbindung ohne stabilisierendes Verbindungsgehäuse,
Figuren 4a bis 4d und 5a bis 5d perspektivisch bzw. in Aufsicht Herstellungsschritte einer Kabelverbindung unter Verwendung eines Verbindungsgehäuses,
Fig. 6a bis 6c im Querschnitt verschiedene Herstellungsschritte einer Kabelverbindung,
Fig 8 einen Längsschnitt einer Kabelverbindung in einer weiteren Ausführungsform,

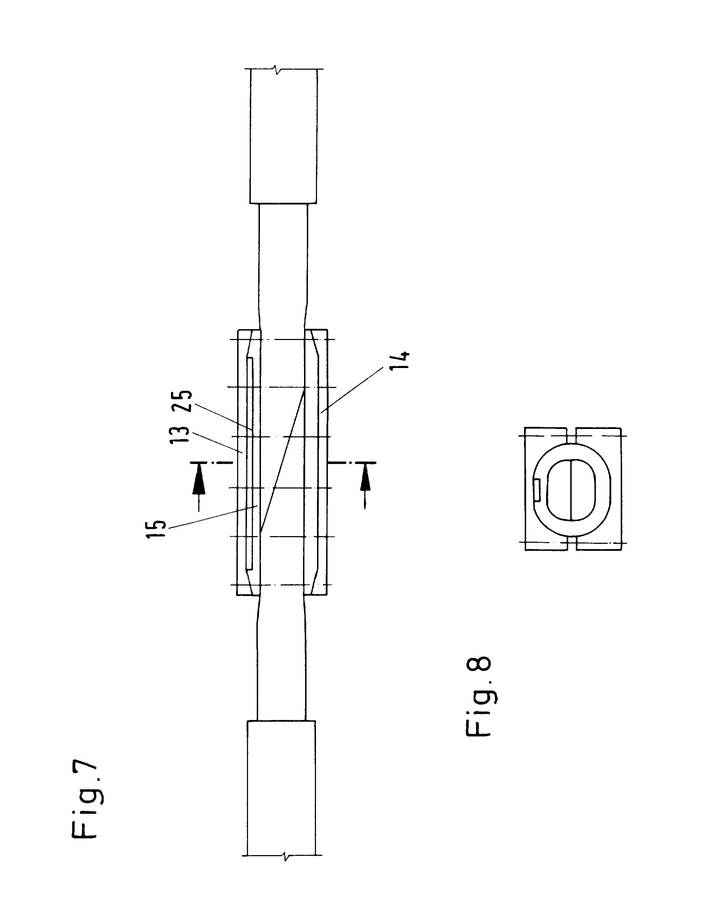

Figur 7 einen Querschnitt der Kabelverbindung der Fig. 7 und

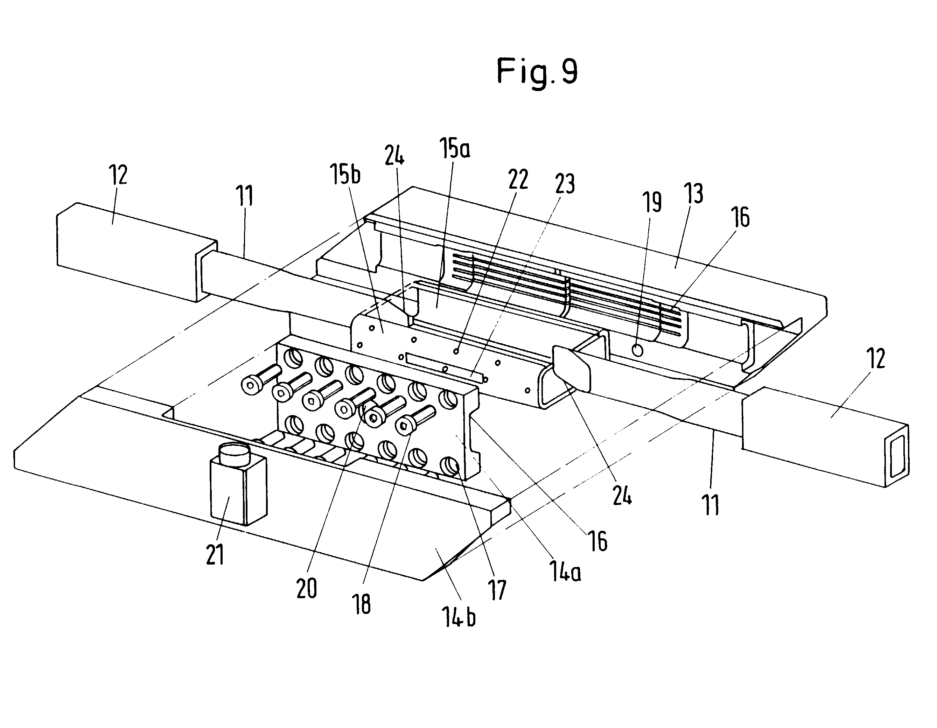

Figur 9 in auseinandergezogener Anordnung eine perspektivische Darstellung eines Verbindungsgehäuses der Kabelverbindung gemäß der Erfindung.

Wenn die supraleitenden Kabel nicht monolithisch sind, werden die Kabelenden nach Entfernen der Kabelhülle und eventueller weiterer vorhandener Komponenten in einer Kupferhülse durch Druckbeaufschlagung verdichtet, so daß sich, wie Figur 3 zeigt, eine Querschnittsreduzierung ergibt und deshalb keine zusätzlichen Wirbelstromverluste auftreten, da es zu keiner Schleifenbildung kommt.

Die Kabelenden werden dann mit dem mit der erforderlichen Festigkeit kompatiblen geringsten Winkel zugeschnitten, typischerweise einem Winkel von 15 bis 20° bzgl. der Kabellängsachse. Über die dadurch mit einer Schrägfläche versehenen Kabelenden werden die beiden Teile einer Kupferhülse gelegt die die Kabelenden in Umfangsrichtung nicht vollständig umgeben müssen. Die sich dadurch ergebende Kabelverbindung hat zusätzlich zu dem durch Pfeile angegebenen Strompfad an den Schrägflächen einen weiteren, über die Kupferhülse führenden Strompfad, so daß sich der Gesamtwiderstand reduziert.

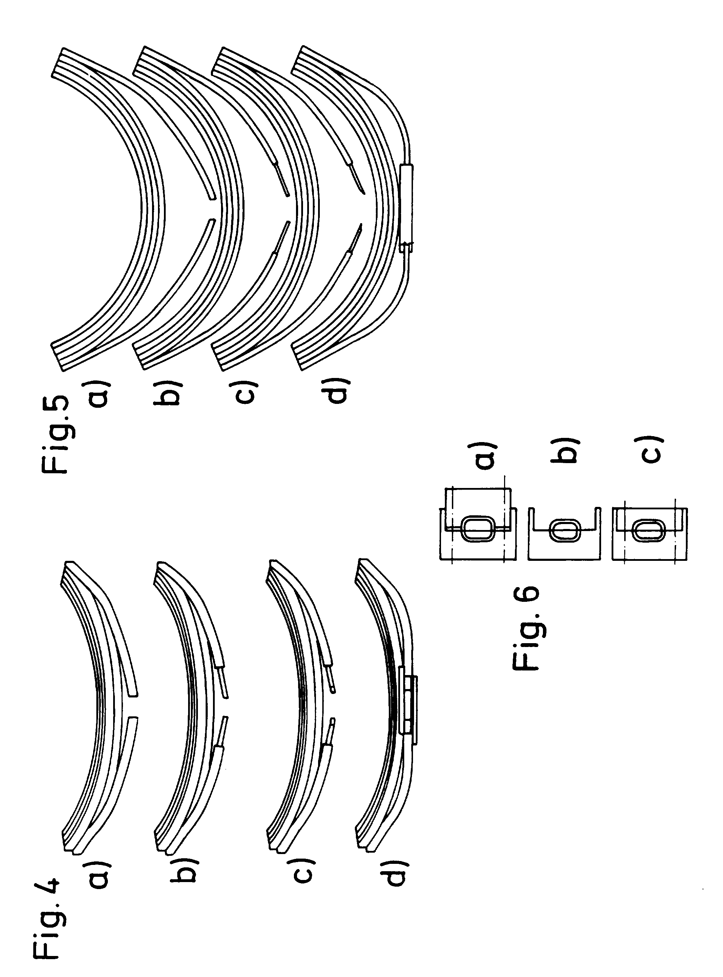

Die Figuren 4 und 5 zeigen schematisch die Herstellung einer Kabelverbindung zwischen zwei übereinanderliegenden Flachspulen mittels einer Hülse und eines Verbindungsgehäuses als Stabilisator, wobei das Verbindungsgehäuse in der in Figur 6 gezeigten Weise verwendet wird. Dabei kann, wie in Figur 6a gezeigt ist, zunächst eine der beiden Gehäusehälften nur zur mechanischen Verbindung der Kabelenden verwendet werden. Diese Gehäusehälfte wird dann nach der Wärmebehandlung entfernt (Fig. 6b), und es wird eine abdichtende Gehäusehälfte eingesetzt, wie Figur 6c zeigt. Vor letzterem Schritt kann, wie aus denr Figuren 7 und 8 hervorgeht, in die die Kabelenden umgebende Kupferhülse zusätzlich noch ein Streifen 25 aus supraleitendem Material eingelegt werden, durch den der Übergangswiderstand durch die Schrägflächen weiter verringert wird. Die Gehäusehälften 13 und 14 sind an den Enden zweckmäßigerweise keilförmig ausgebildet, und die Zugfestigkeit der Kabelverbindung zu erhöhen. Hierzu kann auch die Hülse 15 an den Enden keilförmig ausgebildet sein.

Figur 9 zeigt in auseinandergezogener Anordnung die Herstellung einer Kabelverbindung unter Verwendung des Verbindungsgehäuses. Zum Verbinden zweier supraleitender Kabel werden an den Kabelenden 11 zunächst die Kabelhülle 12 und etwaige hochohmige Beschichtungen der einzelnen Kabeldrähte entfernt. Danach werden die Kabelenden verdichtet und unter einem Winkel von z.B. über 15 bis 20° bzgl. der Kabellängsachse schräg zugeschnitten, so daß Schrägflächen 24 entstehen.

Die Kabelenden 11 werden dann in eine Kupferhülse 15 eingebracht, die aus zwei Hälften 15a und 15b besteht. Auf die Kupferhülse 15 wird dann das Verbindungsgehäuse 13 aufgesetzt, das aus Stahl besteht und zwei Hälften 13 und 14 hat. Die Gehäusehälfte 14 besteht wiederum aus zwei Teilen, nämlich einer Druckplatte 14a und einer Abdichtplatte 14b. Die Kabelenden 11 werden dann durch Verspannen der Druckplatte 14a mit der Gehäusehälfte 13 zum Verdichten mit Druck beaufschlagt. Hierzu werden Schrauben 18 durch Öffnungen 17 in der Druckplatte 14a in Gewindebohrungen 19 der Gehäusehälfte 13 geschraubt.

Da die supraleitenden Kabel im Betrieb normalerweise von einem Kühlmittel durchströmt sind, haben die Gehäusehälfte 13 und die Druckplatte 14a Kühlrillen 16 und die Druckplatte 14a zusätzlich eine Auslaßöffnung 20, die mit einem Auslaß 21 der Abdichtplatte 14b in Verbindung steht.

Die unter der Druckplatte 14a liegende Hülsenhälfte 15b hat Öffnungen 22 und eine Längsvertiefung 23. Die Öffnungen 22 dienen dazu, falls erforderlich ist, Lötmaterial einzuführen, durch das eventuell noch vorhandene Volumina in den Kabelenden gefüllt werden. In die Längsvertiefung 23 kann ein Streifen aus supraleitendem Material eingesetzt werden, um die elektrischen Widerstandseigenschaften zu verbessern.

Vor der üblichen Wärmebehandlung, der die Kabel unterworfen werden, werden die Gehäusehälften 13 und 14 gegebenenfalls ohne die Abdichtplatte 14b zunächst durch Punktschweißen mechanisch ausreichend stabil am Kabelmantel 12 befestigt. Nach der Wärmebehandlung kann die Durckplatte 14a wieder entfernt werden, um Lötmaterial durch die Öffnungen 22 einzufüllen und/oder einen supraleitenden Streifen in die Längsvertiefung 23 einzusetzen. Abschließend werden die Gehäusehälften mit dem Kabelmantel der beiden Kabelenden 11 dicht verschlossen.

## Patentansprüche

1. Kabelverbindung zur elektrischen Verbindung zweier supraleitender Kabel, die zur Herstellung von Flachspulen oder Lagenwicklungen verwendet werden, bei der die an der Verbindungsstelle freigelegten abgeschrägten Enden der beiden Kabel aufeinanderliegen und von einer Hülse (15) aus elektrisch leitendem Material umgeben sind,
**dadurch gekennzeichnet, daß**
die Hülse (15) zweiteilig ausgebildet ist und auf die beiden Hülsenhälften (15a, 15b) ein Verbindungsgehäuse (13, 14) als Stabilisator aufgesetzt ist, das aus zwei gegeneinander verspannten Gehäusehälften besteht.

2. Kabelverbindung nach Anspruch 1,
**dadurch gekennzeichnet, daß**
daß die eine Gehäusehälfte (14) aus zwei Teilen (14a, 14b) besteht, von denen eines (14a) als Druckplatte und das andere (14b) als Abdichtplatte ausgebildet ist.

3. Kabelverbindung nach Anspruch 2,
**dadurch gekennzeichnet, daß**
daß die Druckplatte (14a) Öffnungen (17) für Schrauben (18) und die andere Gehäusehälfte (13) entsprechende Gewindebohrungen (19) aufweist.

4. Kabelverbindung nach einem der Ansprüche 1 bis 3, **dadurch gekennzeichnet, daß**
daß die beiden Gehäusehälften (13, 14) längs verlaufende Kühlrillen (16) aufweisen.

5. Kabelverbindung nach Anspruch 4,
**dadurch gekennzeichnet, daß**
die Kühlrillen (16) in der Druckplatte (14a) ausgebildet sind.

6. Kabelverbindung nach einem der Ansprüche 2 bis 5,
**dadurch gekennzeichnet, daß**
die Druckplatte (14a) eine Kühlmittel-Auslaßöffnung (20) aufweist, die mit einem Auslaß (21) in der Abdichtplatte (14b) zusammenwirkt.

7. Kabelverbindung nach einem der Ansprüche 1 bis 6,
**dadurch gekennzeichnet, daß**
die Hülse (15) die Kabelenden (11) nur teilweise umgibt.

8. Kabelverbindung nach einem der Ansprüche 1 bis 7,
**dadurch gekennzeichnet, daß**
daß die Hülse (15) aus Kupfer besteht.

9. Kabelverbindung nach einem der Ansprüche 1 bis 8,
**dadurch gekennzeichnet, daß**
daß das Gehäuse (13, 14) aus Stahl besteht.

10. Kabelverbindung nach einem der Ansprüche 1 bis 9,
**dadurch gekennzeichnet, daß**
die Hülse (15) eine Längsvertiefung (23) zum Einlegen eines supraleitenden Streifens aufweist.

11. Kabelverbindung nach einem der Ansprüche 1 bis 10,
**dadurch gekennzeichnet, daß**
die Hülse (15) Öffnungen (22) zum Einfüllen von Lötmaterial aufweist.

12. Kabelverbindung nach Anspruch 10 und 11,
**dadurch gekennzeichnet, daß**
die Längsvertiefung (23) und die Öffnungen (22) in derjenigen Hülsenhälfte (15b) ausgebildet sind, die unterhalb der Druckplatte (14a) liegt.

13. Kabelverbindung nach einem der Ansprüche 1 bis 12,
**dadurch gekennzeichnet, daß**
daß die Gehäusehälften (13, 14) an den Enden nach innen keilförmig ausgebildet sind.

14. Kabelverbindung nach einem der Ansprüche 1 bis 13,
**dadurch gekennzeichnet, daß**
daß die Hülse (15) an den Enden nach innen keilförmig ausgebildet ist.

15. Kabelverbindung nach einem der Ansprüche 1 bis 14,
**dadurch gekennzeichnet, daß**
die Kabelenden (11) unter einem Winkel von etwa 15 bis 20° zur Kabellängsachse verlaufen.

## Claims

1. A cable connection for electrically connecting two superconducting cables which are used to produce flat coils or layer windings, in which the bevelled ends of the two cables, which ends are exposed at the connecting location, bear against each other and are surrounded by a sleeve (15) of electrically conducting material, characterised in that the sleeve (15) is of a two-part construction and a connecting housing (13, 14) is fitted as a stabiliser on to the two sleeve halves (15a, 15b), the connecting housing comprising two housing halves which are braced against each other.

2. A cable connection according to claim 1 characterised in that the one housing half (14) comprises two parts (14a, 14b) of which one (14a) is in the form of a pressure plate and the other (14b) is in the form of a sealing plate.

3. A cable connection according to claim 2 characterised in that the pressure plate (14a) has openings (17) for screws (18) and the other housing half (13) has corresponding screwthreaded bores (19).

4. A cable connection according to one of claims 1 to 3 characterised in that the two housing halves (13, 14) have longitudinally extending cooling grooves (16).

5. A cable connection according to claim 4 characterised in that the cooling grooves (16) are provided in the pressure plate (14a).

6. A cable connection according to one of claims 2 to 5 characterised in that the pressure plate (14a) has a coolant outlet opening (20) co-operating with an outlet (21) in the sealing plate (14b).

7. A cable connection according to one of claims 1 to 6 characterised in that the sleeve (15) only partially surrounds the cable ends (11).

8. A cable connection according to one of claims 1 to 7 characterised in that the sleeve (15) comprises copper.

9. A cable connection according to one of claims 1 to 8 characterised in that the housing (13, 14) comprises steel.

10. A cable connection according to one of claims 1 to 9 characterised in that the sleeve (15) has a longitudinal recess (23) for the insertion of a superconducting strip.

11. A cable connection according to one of claims 1 to 10 characterised in that the sleeve (15) has openings (22) for the introduction of solder material.

12. A cable connection according to claims 10 and 11 characterised in that the longitudinal recess (23) and the openings (22) are provided in that sleeve half (15b) which is beneath the pressure plate (14a).

13. A cable connection according to one of claims 1 to 12 characterised in that the housing halves (13, 14) are of a wedge-shaped configuration inwardly at the ends.

14. A cable connection according to one of claims 1 to 13 characterised in that the sleeve (15) is of a wedge-shaped configuration inwardly at the ends.

15. A cable connection according to one of claims 1 to 14 characterised in that the cable ends (11) extend at an angle of about 15 to 20° relative to the cable longitudinal axis.

## Revendications

1. Raccord de câble pour relier électriquement deux câbles supraconducteurs utilisés pour fabriquer des bobines plates ou des enroulements en couches, dans lequel les extrémités des deux câbles, dénudées et biseautées au niveau du point de jonction, sont disposées l'une sur l'autre et sont entourées d'un manchon (15) en un matériau électro-conducteur, caractérisé par le fait que le manchon (15) est en deux parties et qu'un boîtier de liaison (13, 14) servant de stabilisateur, formé de deux moitiés de boîtier serrées l'une contre l'autre, est monté sur les deux parties de (15a, 15b) de manchon.

2. Raccord de câble selon la revendication 1, caractérisé par le fait que l'une (14) des moitiés de boîtier est formée de deux parties (14a, 14b), parmi lesquelles l'une (14a) est conformée en plaque de serrage tandis que l'autre (14b) est conformée en plaque d'étanchéité.

3. Raccord de câble selon la revendication 2, caractérisé par le fait que la plaque de serrage (14a) comporte des ouvertures (17) de passage pour des vis (18) et l'autre moitié (13) de boîtier comporte des trous taraudés (19) adaptés.

4. Raccord de câble selon l'une des revendications 1 à 3, caractérisé par le fait que les deux moitiés (13, 14) de boîtier comportent des rainures de refroidissement (16) qui s'étendent dans la direction longitudinale.

5. Raccord de câble selon la revendication 4, caractérisé par le fait que les rainures de refroidissement (16) sont aménagées dans la plaque de serrage (14a).

6. Raccord de câble selon l'une des revendications 2 à 5, caractérisé par le fait que la plaque de serrage (14a) comporte une ouverture (20) de sortie d'agent réfrigérant qui coopère avec une sortie (21) dans la plaque d'étanchéité (14b).

7. Raccord de câble selon l'une des revendications 1 à 6, caractérisé par le fait que le manchon (15) n'entoure que partiellement les extrémités de câble (11).

8. Raccord de câble selon l'une des revendications 1 à 7, caractérisé par le fait que le manchon (15) est en cuivre.

9. Raccord de câble selon l'une des revendications 1 à 8, caractérisé par le fait que le boîtier (13, 14) est en acier.

10. Raccord de câble selon l'une des revendications 1 à 9, caractérisé par le fait que le manchon (15) comporte une cavité (23) allongée longitudinale pour la mise en place d'une bande supraconductrice.

11. Raccord de câble selon l'une des revendications 1 à 10, caractérisé par le fait que le manchon (15) comporte des ouvertures (22) pour la coulée de matériau de soudage.

12. Raccord de câble selon les revendications 10 et 11, caractérisé par le fait que la cavité (23) allongée longitudinale et les ouvertures (22) sont aménagées dans la moitié (15 b) de manchon située sous la plaque de serrage (14a).

13. Raccord de câble selon l'une des revendications 1 à 12, caractérisé par le fait que les moitiés (13, 14) de boîtier au niveau de leurs extrémités, sont conformées en coin dirigé vers l'intérieur.

14. Raccord de câble selon l'une des revendications 1 à 13, caractérisé par le fait que le manchon (15) est conformé en coin dirigé vers l'intérieur.

15. Raccord de câble selon l'une des revendications 1 à 14, caractérisé par le fait que les extrémités (11) de câble s'étendent suivant un angle compris entre 15 et 20° environ par rapport à l'axe longitudinal du câble.
